# EUROPEAN PATENT APPLICATION

(11) **EP 4 830 864 A1**
(43) Date of publication of application: **28.10.2026**
(21) Application number: 24907221.6
(22) Date of filing: 09.12.2024
(51) Int. Cl.: B23K 35/363

(54) **BRAZING MATERIAL, BRAZING MEMBER, HEAT EXCHANGER, AND METHOD FOR MANUFACTURING BRAZING MEMBER**

(30) Priority: 21.12.2023 JP 2023215697
(71) Applicant: Harima Chemicals, Incorporated, Kakogawa-shi, Hyogo 675-0019 (JP)
(72) Inventor: TAZURU, Aoi, Kakogawa-shi, Hyogo 675-0019 (JP); MINAMI, Mizuho, Kakogawa-shi, Hyogo 675-0019 (JP); MUKAI, Kota, Kakogawa-shi, Hyogo 675-0019 (JP); TSUGENO, Hiromasa, Kakogawa-shi, Hyogo 675-0019 (JP)
(74) Representative: SSM Sandmair
(86) International application number: PCT/JP2024/043435
(87) International publication number: WO 2025/134836

(57) **Abstract**

A brazing material for brazing aluminum or an aluminum alloy includes a fluoride-based flux, a solidifying agent, and an amine compound. The brazing material is solid at 25°C. The solidifying agent contains a normal dialcohol having 6 to 10 carbon atoms. The amine compound contains a secondary amino group-containing compound.

## Description

The present invention relates to a brazing material, a brazing member, a heat exchanger, and a method of producing a brazing member.

### BACKGROUND ART

Conventionally, flux compositions (liquid brazing materials) have been used to remove oxides of metal members when the metal members are welded. Such liquid flux compositions are liquid at room temperature and have fluidity, and thus may not have sufficient handleability and workability. Therefore, solid flux compositions (solid brazing materials) are required.

As a solid flux composition (solid brazing material), the following brazing material has been proposed. More specifically, the brazing material contains a fluoride-based flux, a solidifying agent, and an organic viscosity reducing agent, and is solid at 25°C. In addition, as a method of applying the brazing material, for example, a method of applying the brazing material to a substrate by friction and a method of applying the brazing material by heating and melting the brazing material and discharging the brazing material onto the substrate with a discharge device have been proposed (for example, see Patent Document 1).

### Citation List

### Patent Document

Patent Document 1: International Publication No. WO2020/040128

### SUMMARY OF THE INVENTION

### PROBLEM TO BE SOLVED BY THE INVENTION

In recent years, as a method of applying a brazing material, in addition to the above-described application method by friction (friction method) and the above-described application method by discharge (dispensing method), an application method by spraying (spray method) has been considered.

However, when the above-described brazing material is heated and melted, the flux may flocculate. As a result, sufficient application properties (spray application properties) may not be obtained in the spray method.

When a spray method is employed, the application amount of the brazing material applied may increase. As a result, the amount of the component other than the flux (solidifying agent) adhering to the substrate increases, and the brazing properties may decrease.

The present invention relates to a brazing material having excellent application properties (in particular, spray application properties) and brazing properties, a brazing member, a heat exchanger, and a method of producing a brazing member.

### MEANS FOR SOLVING THE PROBLEM

The present invention [1] includes a brazing material for brazing aluminum or an aluminum alloy, the brazing material including: a fluoride-based flux; a solidifying agent; and an amine compound, the brazing material being solid at 25°C, wherein the solidifying agent contains a normal dialcohol having 6 to 10 carbon atoms, and wherein the amine compound contains a secondary amino group-containing compound.

The present invention [2] includes the brazing material described in the above-described [1], wherein the secondary amino group-containing compound has a ClogP value of -1.85 to 5.00.

The present invention [3] includes the brazing material described in the above-described [1] or [2], wherein a content ratio of the amine compound with respect to 100 parts by mass of the fluoride-based flux is 3 to 5000 parts by mass.

The present invention [4] includes a brazing member including: aluminum or an aluminum alloy; and a coating film obtained by applying the brazing material described in any one of the above-described [1] to [3] to the aluminum or the aluminum alloy.

The present invention [5] includes a heat exchanger including a joined body of the brazing member described in the above-described [4].

The present invention [6] includes a method of producing a brazing member, the method including: a processing step of processing a substrate made of aluminum or an aluminum alloy; and an application step of heating and melting the brazing material described in any one of the above-described [1] to [3], thereafter supplying the brazing material to a spray device, and spraying the brazing material onto the substrate.

The present invention [7] includes a method of producing a brazing member, the method including: a processing step of processing a substrate made of aluminum or an aluminum alloy; and an application step of heating and melting the brazing material described in any one of the above-described [1] to [3], thereafter supplying the brazing material to a discharge device, and discharging the brazing material onto the substrate.

The present invention [8] includes a method of producing a brazing member, the method including: a processing step of processing a substrate made of aluminum or an aluminum alloy; and an application step of applying the brazing material described in any one of the above-described [1] to [3] to the substrate by friction of the brazing material.

### EFFECTS OF THE INVENTION

The brazing member of the present invention contains a solidifying agent and an amine compound. The solidifying agent contains a normal dialcohol having 6 to 10 carbon atoms, and the amine compound contains a secondary amino group-containing compound. Therefore, in the above-described brazing member, flocculation of the fluoride-based flux is suppressed. As a result, the above-described brazing material has excellent application properties (in particular, spray application properties) and brazing properties.

In the brazing member of the present invention, the heat exchanger of the present invention, and the method of producing a brazing member of the present invention, the above-described brazing material is used. Therefore, according to the above-described brazing member, the above-described heat exchanger, and the above-described method of producing a brazing member, excellent application properties and brazing properties can be obtained.

### BRIEF DESCRIPTION OF THE DRAWINGS

FIG. 1 is a schematic perspective view showing one embodiment of a heat exchanger of the present invention.
FIG. 2 is an exploded perspective view of a plate joint tube used in the heat exchanger shown in FIG. 1.
FIG. 3A shows a step of processing an Al substrate, and FIG. 3B shows a step of applying a brazing material to the Al substrate.

### DESCRIPTION OF THE EMBODIMENTS

### 1. Brazing Material

### [Brazing Component]

The brazing material of the present invention is a brazing material for brazing aluminum or an aluminum alloy. The brazing material contains a fluoride-based flux, a solidifying agent, and an amine compound as essential components.

Hereinafter, the fluoride-based flux, the solidifying agent, and the amine compound may be collectively referred to as a "brazing component". That is, the brazing material contains the brazing component as an essential component, and the brazing component consists of the fluoride-based flux, the solidifying agent, and the amine compound.

As described later, the brazing material may contain a brazing filler metal (for example, metal powder) as an optional component in addition to the brazing component. The brazing filler metal is not included in the brazing component.

The content ratio of the brazing component with respect to the total amount of the brazing material is, for example, 50 to 100% by mass, preferably 70 to 100% by mass. When the brazing material contains a brazing filler metal (optional component, which will be described later), the content ratio of the brazing component with respect to the total amount of the brazing material is, for example, 50 to 90% by mass, preferably 70 to 80% by mass.

### [Fluoride-based Flux]

Examples of the fluoride-based flux include Cs-Al-F-based flux, K-Zn-F-based flux, and K-Al-F-based flux. The Cs-Al-F based flux contains cesium (Cs), aluminum (Al), and fluorine (F). Examples of the Cs-Al-F-based flux include cesium fluoroaluminate (non-reactive cesium-based flux), and specifically examples thereof include CsAlF₄, Cs₂AlF₅ and Cs₃AlF₆. The K-Zn-F-based flux contains potassium (K), zinc (Zn), and fluorine (F). Examples of the K-Zn-F-based flux include potassium fluoride zincate, and specifically examples thereof include KZnF₃. The K-Al-F-based flux contains potassium (K), aluminum (Al), and fluorine (F). Examples of the K-Al-F-based flux include potassium fluoroaluminate, and specifically examples thereof include KAlF₄, K₂AlF₅ and K₃AlF₆. These may be used alone or in combination of two or more kinds thereof. As the fluoride-based flux, preferably a K-Al-F-based flux is used.

From the viewpoint of application properties and brazing properties, the blending ratio of the fluoride-based flux with respect to the total amount of the brazing component (fluoride-based flux, solidifying agent, and amine compound) is, for example, 1 to 80% by mass, preferably 5 to 70% by mass, more preferably 5 to 60% by mass, even more preferably 10 to 50% by mass, even more preferably 30 to 50% by mass, and particularly preferably 35 to 45% by mass.

In particular, from the viewpoint of brazing properties, the lower limit of the blending ratio of the fluoride-based flux with respect to the total amount of the brazing component (fluoride-based flux, solidifying agent, and amine compound) is, for example, 1% by mass or more, preferably 5% by mass or more, more preferably 10% by mass or more, even more preferably 30% by mass or more, and particularly preferably 35% by mass or more.

Furthermore, from the viewpoint of application properties, the upper limit of the blending ratio of the fluoride-based flux with respect to the total amount of the brazing component (fluoride-based flux, solidifying agent, and amine compound) is, for example, 80% by mass or less, preferably 70% by mass or less, more preferably 60% by mass or less, even more preferably 50% by mass or less, and particularly preferably 45% by mass or less.

### [Solidifying Agent]

The solidifying agent is a component that adjusts the melting temperature of the brazing material so that the brazing material becomes solid at 25°C to improve the shape retention. The solidifying agent does not include a known gelling agent, and the solidifying agent and the gelling agent are distinguished from each other. In addition, the solidifying agent does not include an amine compound described later, and the solidifying agent and the amine compound are distinguished from each other. More specifically, the solidifying agent contains a normal dialcohol having 6 to 10 carbon atoms.

The normal dialcohol having 6 to 10 carbon atoms is a straight-chain aliphatic alcohol having two hydroxyl groups in one molecule (C6-10 straight-chain aliphatic dihydric alcohol). Examples of the normal dialcohol having 6 to 10 carbon atoms include 1,6-hexanediol, 1,7-heptanediol, 1,8-octanediol, 1,9-nonanediol, and 1,10-decanediol. These may be used alone or in combination of two or more kinds thereof. As the normal dialcohol having 6 to 10 carbon atoms, preferably a straight-chain aliphatic dihydric alcohol having 6 to 9 carbon atoms, more preferably a straight-chain aliphatic dihydric alcohol having 7 to 9 carbon atoms, even more preferably a straight-chain aliphatic dihydric alcohol having 8 to 9 carbon atoms, and particularly preferably a straight-chain aliphatic dihydric alcohol having 9 carbon atoms (i.e., 1,9-nonanediol) are used. These may be used alone or in combination of two or more kinds thereof.

The solidifying agent may further contain another solidifying agent. The other solidifying agent is a solidifying agent excluding a normal dialcohol having 6 to 10 carbon atoms. Examples of the other solidifying agent include the solidifying agents (excluding a normal dialcohol having 6 to 10 carbon atoms) described in [0051] to [0092] of WO2020/040128.

More specifically, examples of the other solidifying agent include room-temperature-solidifying hydrocarbon, room-temperature-solidifying alkyl alcohol (excluding a normal dialcohol having 6 to 10 carbon atoms), room-temperature-solidifying ether alcohol, and high carbon carboxylic acid-high carbon alcohol ester. Examples of the room-temperature-solidifying hydrocarbon include natural wax and synthetic wax. Examples of the room-temperature-solidifying alkyl alcohol (excluding a normal dialcohol having 6 to 10 carbon atoms) include normal monool having 14 to 30 carbon atoms, normal dialcohol having 11 to 30 carbon atoms, and trihydric or higher alcohol having 5 to 30 carbon atoms. Examples of the normal monool having 14 to 30 carbon atoms include tetradecanol, hexadecanol, octadecanol, and eicosanol. Examples of the normal dialcohol having 11 to 30 carbon atoms include 1,11-undecanediol, 1,12-dodecanediol, and 1,20-eicosandiol. Examples of the trihydric or higher alcohol having 5 to 30 carbon atoms include trimethylolpropane and pentaerythritol. Examples of the room-temperature-solidifying ether alcohol include polyether monool and polyether glycol. Examples of the polyether monool include polyethylene glycol monomethyl ether and polyethylene glycol monoethyl ether. Examples of the polyether glycol include polyoxyethylene glycol, polyoxypropylene glycol, and polyoxybutylene glycol. Examples of the high carbon carboxylic acid-high carbon alcohol ester include a reaction product of a carboxylic acid having 10 or more carbon atoms and an alcohol having 8 or more carbon atoms. Examples of the carboxylic acid having 10 or more carbon atoms include capric acid, lauric acid, myristic acid, palmitic acid, stearic acid, decane diacid, dodecane diacid, and anhydrides thereof. Examples of the alcohol having 8 or more carbon atoms include octyl alcohol, lauryl alcohol, myristyl alcohol, cetyl alcohol, stearyl alcohol, oleyl alcohol, linolyl alcohol, octanediol, nonanediol, decanediol, and dodecanediol. More specifically, examples of the high carbon carboxylic acid-high carbon alcohol ester include carnauba wax, candelilla wax, and triacontanyl palmitic acid. These may be used alone or in combination of two or more kinds thereof.

From the viewpoint of application properties, the content ratio of the other solidifying agent (solidifying agent excluding normal dialcohol having 6 to 10 carbon atoms) with respect to the total amount of the solidifying agent is, for example, 0 to 20% by mass, preferably 0 to 10% by mass, more preferably 0 to 5% by mass, and particularly preferably 0% by mass.

That is, from the viewpoint of application properties, the content ratio of the normal dialcohol having 6 to 10 carbon atoms with respect to the total amount of the solidifying agent is, for example, 80 to 100% by mass, preferably 90 to 100% by mass, more preferably 95 to 100% by mass, and particularly preferably 100% by mass.

That is, from the viewpoint of application properties, the solidifying agent particularly preferably consists of a normal dialcohol having 6 to 10 carbon atoms.

From the viewpoint of application properties and brazing properties, the content ratio of the solidifying agent with respect to the total amount of the brazing component (fluoride-based flux, solidifying agent, and amine compound) is, for example, 1 to 95% by mass, preferably 10 to 90% by mass, more preferably 30 to 80% by mass, even more preferably 35 to 70% by mass, even more preferably 39.5 to 60% by mass, even more preferably 40 to 60% by mass, and particularly preferably 50 to 60% by mass.

In particular, from the viewpoint of application properties, the lower limit of the content ratio of the solidifying agent with respect to the total amount of the brazing component (fluoride-based flux, solidifying agent, and amine compound) is, for example, 1% by mass or more, preferably 10% by mass or more, more preferably 30% by mass or more, even more preferably 35% by mass or more, even more preferably 39.5% by mass or more, even more preferably 40% by mass or more, and particularly preferably 50% by mass or more.

From the viewpoint of brazing properties, the upper limit of the content ratio of the solidifying agent with respect to the total amount of the brazing component (fluoride-based flux, solidifying agent and amine compound) is, for example, 95% by mass or less, preferably 90% by mass or less, more preferably 80% by mass or less, even more preferably 70% by mass or less, even more preferably 60% by mass or less, even more preferably 60% by mass or less, and particularly preferably 60% by mass or less.

From the viewpoint of application properties and brazing properties, the content ratio of the solidifying agent with respect to 100 parts by mass of the fluoride-based flux is, for example, 1 to 2000 parts by mass, preferably 10 to 1000 parts by mass, more preferably 50 to 500 parts by mass, even more preferably 100 to 300 parts by mass, and particularly preferably 120 to 200 parts by mass.

### [Amine Compound]

The amine compound improves the stability of mixing the fluoride-based flux and the solidifying agent in the melt of the brazing material and lowers the melt viscosity of the brazing material. That is, the amine compound is a viscosity reducing agent (surfactant) with a viscosity reducing action (surface active action).

The amine compound contains a secondary amino group-containing compound.

The secondary amino group-containing compound is a compound having one or more secondary amino groups in one molecule. As long as the secondary amino group-containing compound has one or more secondary amino groups in one molecule, the other parts of the structure are not particularly limited. For example, the secondary amino group-containing compound may or may not contain another amino group (for example, a primary amino group and a tertiary amino group). The secondary amino group-containing compound may or may not contain a functional group (for example, a hydroxyl group and a mercapto group) other than an amino group.

That is, examples of the secondary amino group-containing compound include a secondary amino group-containing compound which contains a secondary amino group, does not contain any other amino group, and does not contain a functional group other than an amino group. Examples of such a secondary amino group-containing compound include dibutylamine, diethylamine, dipropylamine, N-butylethylamine, and diisopropylamine. These may be used alone or in combination of two or more kinds thereof.

Examples of the secondary amino group-containing compound include a secondary amino group-containing compound that contains a secondary amino group, contains another amino group, and does not contain a functional group other than an amino group. Examples of such a secondary amino group-containing compound include diaminodiethylamine, diaminodiphenylamine, diaminodipropylamine, diaminodipropylpropanediamine, triethyltetramine, tetraethylenepentaamine, pentaethylhexanamine, and aminomethylpiperazine. These may be used alone or in combination of two or more kinds thereof.

Examples of the secondary amino group-containing compound include a secondary amino group-containing compound that contains a secondary amino group, does not contain any other amino group, and contains a functional group other than an amino group. Examples of such a secondary amino group-containing compound include mono-n-dibutylethanolamine, diethanolamine, dodecylethanolamine, ethylaminoethanol, dipropargylamine, and methylaminoethanol. These may be used alone or in combination of two or more kinds thereof.

Examples of the secondary amino group-containing compound include a secondary amino group-containing compound that contains a secondary amino group, another amino group, and a functional group other than an amino group. Examples of such a secondary amino group-containing compound include aminoethylethanolamine. These may be used alone or in combination of two or more kinds thereof.

Preferably, as the secondary amino group-containing compound, a secondary amino group-containing compound that does not contain another amino group and contains a functional group other than an amino group, and a secondary amino group-containing compound that contains another amino group and contains a functional group other than an amino group. As the secondary amino group-containing compound, more preferably a secondary amino group-containing compound that contains another amino group and a functional group other than an amino group is used, and further preferably aminoethylethanolamine is used.

The secondary amino group-containing compound is preferably selected based on the ClogP value. From the viewpoint of application properties and anti-hard caking properties, the ClogP value of the secondary amino group-containing compound is, for example, -2.00 to 8.00, preferably -1.90 to 6.00, more preferably -1.85 to 5.00, even more preferably -1.60 to 3.00, even more preferably -1.50 to 2.00, even more preferably -1.30 to 1.50, particularly preferably -1.00 to 1.00.

In particular, from the viewpoint of improving melt stability and suppressing hard cake formation, the lower limit of the ClogP value of the secondary amino group-containing compound is, for example, -2.00 or more, preferably -1.90 or more, more preferably -1.85 or more, even more preferably -1.60 or more, even more preferably -1.50 or more, even more preferably -1.30 or more, and particularly preferably -1.00 or more.

Furthermore, from the viewpoint of improving the dispersibility of the flux, suppressing flocculation, and obtaining a homogeneous coating film, the upper limit of the ClogP value of the secondary amino group-containing compound is, for example, 8.00 or less, preferably 6.00 or less, more preferably 5.00 or less, even more preferably 3.00 or less, even more preferably 2.00 or less, even more preferably 1.50 or less, and particularly preferably 1.00 or less.

The ClogP value is a logP value obtained by calculation. The logP value is a logarithmic value of the partition coefficient (P) of n-octanol/water and is a parameter indicating the degree of hydrophobicity and hydrophilicity. In the present application, the ClogP value is calculated using, for example, a commercially available software package (for example, Chem Draw Ultra ver.14.0. (CambridgeSoft Corporation, USA)) (the same applies hereinafter).

The amine compound may further contain another amine compound. The other amine compound is an amine compound excluding a secondary amino group-containing compound, and is an amine compound that does not contain a secondary amino group (hereinafter, referred to as a secondary amino group-free compound). Examples of the secondary amino group-free compound include a primary amino group-containing compound that does not contain a secondary amino group, and a tertiary amino group-containing compound that does not contain a secondary amino group. Examples of the primary amino group-containing compound that does not contain a secondary amino group include ethanolamine, behenylamine acetate, and laurylamine acetate. Examples of the tertiary amino group-containing compound that does not contain a secondary amino group include triethylamine and triethanolamine. These may be used alone or in combination of two or more kinds thereof.

From the viewpoint of application properties, the content ratio of the other amine compound (amine compound excluding the secondary amino group-containing compound) with respect to the total amount of the amine compound is, for example, 0 to 20% by mass, preferably 0 to 10% by mass, more preferably 0 to 5% by mass, and particularly preferably 0% by mass.

That is, from the viewpoint of application properties, the content ratio of the secondary amino group-containing compound with respect to the total amount of the amine compound is, for example, 80 to 100% by mass, preferably 90 to 100% by mass, more preferably 95 to 100% by mass, and particularly preferably 100% by mass.

That is, from the viewpoint of application properties, the amine compound particularly preferably consists of a secondary amino group-containing compound.

From the viewpoint of application properties and anti-hard caking properties, the content ratio of the amine compound with respect to the total amount of the brazing component (fluoride-based flux, solidifying agent, and amine compound) is, for example, 0.01 to 20% by mass, preferably 0.05 to 10% by mass, more preferably 0.1 to 5% by mass, even more preferably 0.2 to 1% by mass, and particularly preferably 0.3 to 0.6% by mass.

In particular, from the viewpoint of application properties, the lower limit of the content ratio of the amine compound with respect to the total amount of the brazing component (fluoride-based flux, solidifying agent, and amine compound) is, for example, 0.01% by mass or more, preferably 0.05% by mass or more, more preferably 0.1% by mass or more, even more preferably 0.2% by mass or more, and particularly preferably 0.3% by mass or more.

Furthermore, from the viewpoint of anti-hard caking properties, the upper limit of the content ratio of the amine compound with respect to the total amount of the brazing component (fluoride-based flux, solidifying agent, and amine compound) is, for example, 20% by mass or less, preferably 10% by mass or less, more preferably 5% by mass or less, even more preferably 1% by mass or less, and particularly preferably 0.6% by mass or less.

From the viewpoint of application properties and anti-hard caking properties, the content ratio of the amine compound with respect to 100 parts by mass of the fluoride-based flux is, for example, 1 to 10000 parts by mass, preferably 3 to 5000 parts by mass, more preferably 10 to 2500 parts by mass, even more preferably 50 to 1000 parts by mass, and particularly preferably 100 to 300 parts by mass.

In particular, from the viewpoint of improving the dispersibility of the flux and suppressing flocculation, the lower limit of the content ratio of the amine compound is, for example, 1 part by mass or more, preferably 3 parts by mass or more, more preferably 10 parts by mass or more, even more preferably 50 parts by mass or more, and particularly preferably 100 parts by mass or more.

In addition, from the viewpoint of improving melt stability and suppressing hard cake formation, the upper limit of the content ratio of the amine compound with respect to 100 parts by mass of the fluoride-based flux is, for example, 10000 parts by mass or less, preferably 5000 parts by mass or less, more preferably 2500 parts by mass or less, even more preferably 1000 parts by mass or less, and particularly preferably 300 parts by mass or less.

### [Brazing Filler Metal]

The brazing material may contain a brazing filler metal as an optional component in order to improve working efficiency. Examples of the brazing filler metal include metals that can be alloyed with aluminum, and alloys of the metals and aluminum. The brazing filler metal may contain another metal at an appropriate ratio. More specifically, examples of the brazing filler metal include metal silicon and a silicon-aluminum alloy. These may be used alone or in combination of two or more kinds thereof. The brazing filler metal is preferably a metal powder. The average particle diameter of the metal powder is not particularly limited, and is appropriately set according to the purpose and use.

The blending ratio of the brazing filler metal is not particularly limited, but is, for example, 0 to 70% by mass, preferably 5 to 60% by mass, more preferably 10 to 50% by mass, and even more preferably 20 to 40% by mass with respect to the total amount of the brazing material.

The content ratio of the brazing filler metal is not particularly limited, but is, for example, 3 to 300 parts by mass, preferably 5 to 100 parts by mass, and more preferably 10 to 50 parts by mass with respect to 100 parts by mass of the brazing component.

### [Additive]

The brazing material may contain a known additive as an optional component in order to improve working efficiency. Examples of the additive include an antioxidant, a corrosion inhibitor, an antifoaming agent, a thickener, and a coloring agent. These may be used alone or in combination of two or more kinds thereof. The addition amount and addition timing of the additive are appropriately set according to the purpose and use. For example, the content ratio of the additive with respect to the total amount of the brazing material is 10% by mass or less. The brazing material may contain a gelling agent as necessary, but preferably does not contain a gelling agent from the viewpoint of brazing properties (appearance).

### [Preparation of Brazing Material]

The brazing material is obtained by mixing and stirring the above-described components at the above-described blending ratios by a known method. At this time, the fluoride-based flux is dispersed by the amine compound, and the brazing material is solidified by the solidifying agent. That is, the above-described brazing material is solid, and more specifically, is solid at 25°C.

Being solid at 25°C is defined as "not in liquid form" as a result of the test conducted at 25°C in accordance with the method described in the "Method of Confirmation of Liquid Status" described in the "Notice No. 11 of the Office of Hazardous Materials Regulation-Cabinet Order for Partial Revision of the Cabinet Order Concerning the Control of Hazardous Materials (Part Relating to Examination and Property of Hazardous Materials) and the Promulgation of the Ministerial Order on Examination and Property of Hazardous Materials (Notification)".

The brazing material is softened by heating. More specifically, for example, when the above-described brazing material is applied to aluminum or an aluminum alloy, the solid brazing material is heated as detailed later. As a result, the brazing material softens and melts.

The heating temperature is, for example, 40 to 400°C, preferably 50 to 300°C, and more preferably 60 to 150°C. In other words, the brazing material preferably has a molten state at least at 150°C.

The viscosity of the brazing material at 60°C (in a molten state) is, for example, 0.01 to 50 Pa·s, preferably 0.03 to 10 Pa·s, more preferably 0.05 to 5 Pa·s, even more preferably 0.09 to 5 Pa·s, and particularly preferably 0.1 to 2 Pa·s from the viewpoint of spray application properties.

### [Application of Brazing Material]

The brazing material is applied to aluminum or an aluminum alloy, and then solidified to form a coating film (solid coating film).

Examples of the application method include a spray method (spraying method). In the spray method, after the brazing material is heated and melted, the melt of the brazing material is supplied to a known spray device (spray). Then, the melt of the brazing material is sprayed onto the surface of an arbitrary object to be coated. As a result, a coating film of the brazing material is formed on the surface of the arbitrary object to be coated. According to the spray method, a uniform coating film can be obtained with good workability.

Examples of the application method also include a dispensing method (discharge method). In the dispensing method, after the brazing material is heated and melted, the melt of the brazing material is supplied to a discharge device (dispenser). Then, the melt of the brazing material is discharged to an arbitrary object to be coated. As a result, a coating film of the brazing material is formed on the surface of the arbitrary object to be coated. According to the dispensing method, a coating film of the brazing material can be more accurately formed at a desired position.

Examples of the application method also include a friction method. In the friction method, a solid brazing material is rubbed against an arbitrary object to be coated without being heated and melted. As a result, a coating film of the brazing material is formed on the surface of the arbitrary object to be coated. According to the friction method, the brazing material can be applied with higher workability.

The application method is not limited to the above, and a known method may be employed. More specifically, the application method is not particularly limited, and examples thereof include a brush coating method, a roll coating method, a spin coating method, a dip coating method, a spray coating method, a bar coating method, a knife coating method, a die coating method, an ink jet method, and a gravure coating method. The application amount (coating film thickness) of the brazing material applied is appropriately set according to the purpose and application.

### [Operations and Effects]

The above-described brazing member contains a solidifying agent and an amine compound. The solidifying agent contains a normal dialcohol having 6 to 10 carbon atoms, and the amine compound contains a secondary amino group-containing compound. Therefore, in the above-described brazing member, flocculation of the fluoride-based flux is suppressed. As a result, the above-described brazing material has excellent application properties (in particular, spray application properties) and brazing properties.

More specifically, the nucleophilicity of an amino group is determined from, for example, the number of electron donating groups bonded to a nitrogen atom and the influence of a lone electron pair of the nitrogen atom, and a secondary amino group has the highest nucleophilicity among primary to tertiary amino groups. That is, a compound containing a secondary amino group (a secondary amino group-containing compound) has relatively high nucleophilicity as compared with a compound that does not contain a secondary amino group (a secondary amino group-free compound). Therefore, the secondary amino group-containing compound can be preferably adsorbed to the fluoride-based flux, and improve the dispersibility of the fluoride-based flux. That is, when the amine compound contains a secondary amino group-containing compound, flocculation of the fluoride-based flux can be suppressed, and excellent application properties can be ensured.

On the other hand, when the amine compound contains a secondary amino group-containing compound, the compatibility between the amine compound and the solidifying agent cannot be sufficiently obtained depending on the type of the solidifying agent, and a reduction in the application properties (homogeneity) and the brazing properties may be caused.

On the other hand, in the above-described brazing material, the solidifying agent contains normal dialcohol having 6 to 10 carbon atoms. Therefore, even when the amine compound contains a secondary amino group-containing compound, the compatibility between the amine compound and the solidifying agent is good. As a result, excellent application properties (homogeneity) and brazing properties are obtained.

### 2. Brazing Member and Heat Exchanger

Hereinafter, the brazing member and the heat exchanger are detailed.

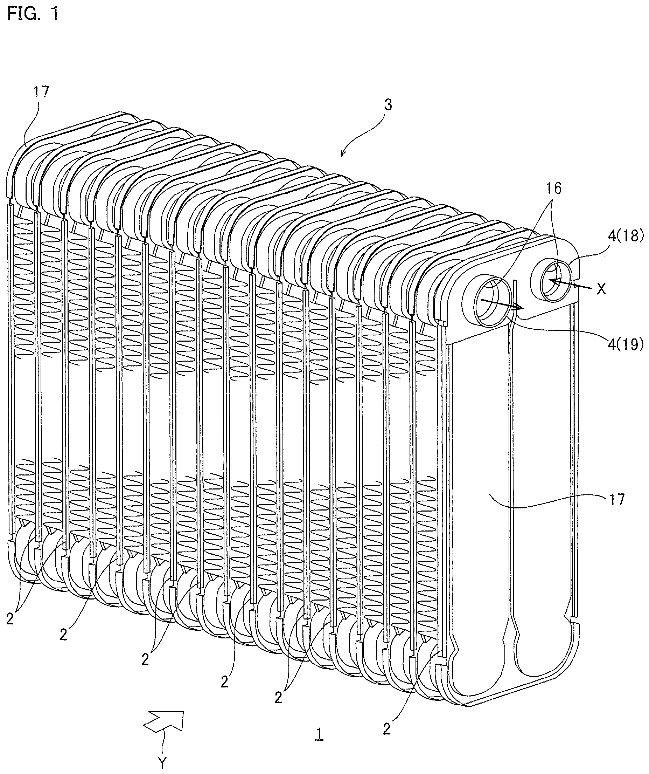

In FIG. 1, a heat exchanger 1 is, for example, a laminated heat exchanger used in an air-conditioning machine (air conditioner) or the like, and has a known laminated structure.

Specifically, the heat exchanger 1 includes a tube laminate 3 in which a plurality of plate joint tubes 2 are laminated, and a refrigerant supply/drain pipe 4 that supplies and drains a refrigerant to and from the tube laminate 3.

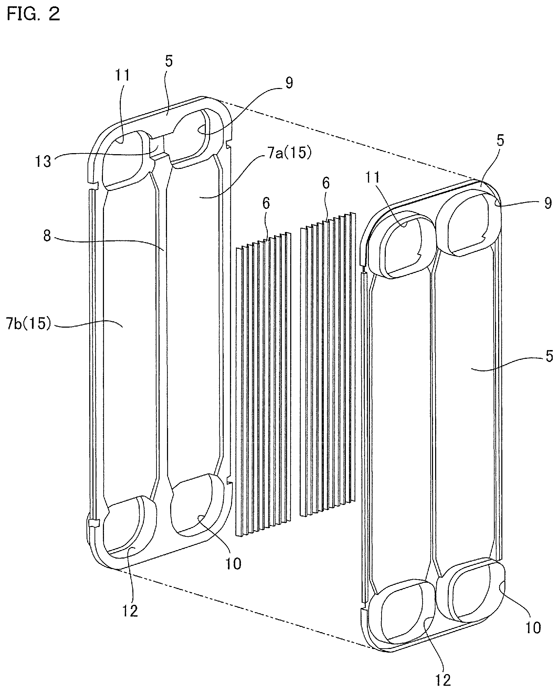

In the tube laminate 3, the plate joint tube 2 is a hollow member having a substantially flat shape, and as shown in FIG. 2, includes a pair (two) of plate members 5 disposed to face each other, and two inner fins 6 disposed inside the plate members 5.

Each plate member 5 is a member (Al member) made of aluminum or an aluminum alloy, has a substantially long rectangular shape in a plan view, and has a concave portion 7 having a substantially rectangular shape in a plan view extending along the longitudinal direction in a substantially central portion of the plate member 5 in the longitudinal direction (region excluding both end portions of the plate member 5 in the longitudinal direction).

In the concave portion 7, a convex portion 8 (rib) extending along the longitudinal direction of the concave portion 7 is erected in a central portion of the concave portion 7 in the width direction orthogonal to the longitudinal direction. That is, the concave portion 7 is divided into a concave portion 7a on one side in the width direction and a concave portion 7b on the other side in the width direction by the convex portion 8.

In addition, a first through hole 9 is made in a one-side end portion of the concave portion 7a in the longitudinal direction.

In addition, a second through hole 10 is made in the other-side end portion of the concave portion 7a in the longitudinal direction.

In addition, a third through hole 11 is made in a one-side end portion of the concave portion 7b in the longitudinal direction.

In addition, a fourth through hole 12 is made in the other-side end portion of the concave portion 7b in the longitudinal direction.

A groove 13 is formed between the first through hole 9 and the third through hole 11, thereby allowing a refrigerant (described later) to flow between the first through hole 9 and the third through hole 11. The groove 13 is not formed between the second through hole 10 and the fourth through hole 12, and the second through hole 10 and the fourth through hole 12 are independent from each other.

The inner fin 6 is a member (Al member) made of aluminum or an aluminum alloy, and one inner fin 6 is provided in the concave portion 7a, and one inner fin 6 is provided in the concave portion 7b (a total of two inner fins 6). Specifically, each of the inner fins 6 has a corrugated plate shape having substantially the same size as the concave portion 7a and the concave portion 7b, and can be accommodated in a refrigerant passage 15 (described later).

As detailed later, the plate joint tube 2 is formed by brazing a pair of the plate members 5 and the inner fins 6 to each other.

As shown in FIG. 1, a plurality of the formed plate joint tubes 2 are laminated so that the first through holes 9 overlap each other, the second through holes 10 overlap each other, the third through holes 11 overlap each other, and the fourth through holes 12 overlap each other, to form a refrigerant supply/drain passage 16. The laminated plate joint tubes 2 are fixed by the outer plates 17 from both sides in the lamination direction.

More specifically, the first through hole 9, the second through hole 10, the third through hole 11, and the fourth through hole 12 are closed by the outer plate 17 on one side (rear side) in the lamination direction. On the other hand, the third through hole 11 and the fourth through hole 12 are closed by the outer plate 17 on the other side (front side) in the lamination direction, and the first through hole 9 and the second through hole 10 are opened.

Thus, a tube laminate 3 is obtained. The tube laminate 3 may be provided with a partition plate for adjusting the flow path of the refrigerant and an outer fin for improving the heat exchange efficiency between the plate joint tubes 2 as necessary.

The refrigerant supply/drain pipe 4 includes a refrigerant supply pipe 18 for supplying the refrigerant to the tube laminate 3 and a refrigerant drain pipe 19 for draining the refrigerant from the tube laminate 3.

A one-side end portion of the refrigerant supply pipe 18 is connected to the first through hole 9, and the other-side end portion of the refrigerant supply pipe 18 is connected to a refrigerant tank (not shown). A known refrigerant such as hydrofluoroolefin is stored in the refrigerant tank.

A one-side end portion of the refrigerant drain pipe 19 is connected to the second through hole 10, and the other-side end portion of the refrigerant drain pipe 19 is connected to a refrigerant recovery tank (not shown).

In such a heat exchanger 1, by supplying a refrigerant X from the refrigerant supply pipe 18 to the refrigerant passage 15 inside the plate joint tube 2, the refrigerant X flowing inside the tube laminate 3 and an air-conditioning air Y flowing outside the tube laminate 3 exchange the heat, and the air-conditioning air Y can be cooled.

Hereinafter, a method of producing the plate joint tube 2 and a brazing plate 20 as a brazing member for producing the plate joint tube 2 is detailed.

That is, in the production of the plate joining tube 2, first, a brazing plate 20 including a plate member 5 (Al member) and a coating film 29 of the brazing material formed on the surface of the plate member 5 is produced, and then the obtained brazing plate 20 and the above-described inner fins 6 are brazed.

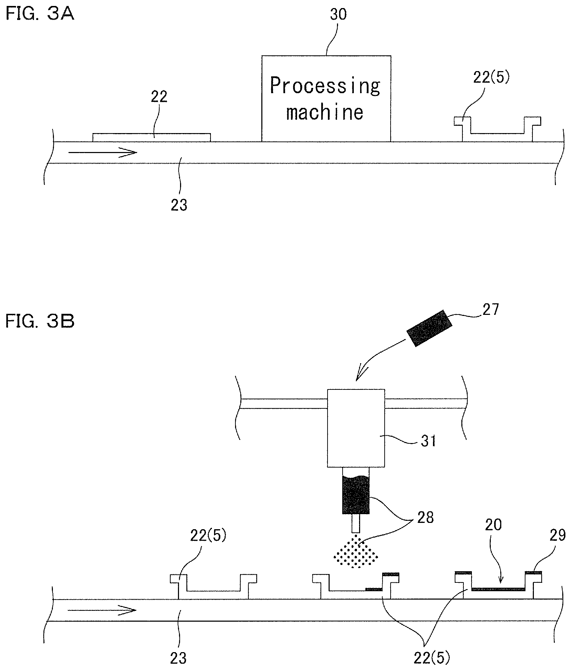

In the production of the brazing plate 20, for example, as shown in FIG. 3, a substrate 22 (hereinafter, referred to as an Al substrate) made of aluminum or an aluminum alloy and having a thin-plate shape is prepared, the Al substrate 22 is processed, and then the above-described brazing material is applied to the Al substrate 22.

In FIG. 3, the Al substrate 22 is moved in a predetermined direction (for example, from the left side to the right side of the drawing) by a moving apparatus 23 such as a belt conveyor.

Then, the following FIG. 3A (processing step) and FIG. 3B (application step) are successively carried out from the upstream side of the moving apparatus 23 toward the downstream side.

That is, in this method, as shown in FIG. 3A, first, the Al substrate 22 is processed (processing step).

More specifically, while being intermittently moved in the predetermined direction on the producing line, the Al substrate 22 is processed and formed into a predetermined shape (for example, the shape of the plate member 5 described above).

The processing method is not particularly limited, and for example, a known processing machine 30 such as a press processing machine, a bending processing machine, or a cutting processing machine is used.

Thus, a plate member 5 (see FIG. 2) is obtained as the processed Al substrate 22.

Next, in this method, as shown in FIG. 3B, the above-described brazing material 27 is heated and melted, and the obtained liquid molten composition 28 is applied to the plate member 5 (application step).

More specifically, in the application step, the molten composition 28 of the brazing material 27 is applied to the concave portion 7 (see FIG. 2) of the plate member 5.

The heating temperature of the brazing material 27 is, for example, 40 to 400°C, preferably 50 to 300°C, and more preferably 60 to 150°C.

As the method of applying the molten composition 28, a spray method is preferably employed. That is, preferably, the molten composition 28 is supplied to the spray device 31 and sprayed onto the plate member 5 (Al substrate 22). The conditions (such as temperature and pressure) for spraying with the spray device 31 (spray) are appropriately set according to the purpose and use. By using the spray device 31 (spray), it is possible to obtain a more uniform coating film (solidified coating film) 29 of the molten composition 28. The thickness of the coating film 29 is not particularly limited, and is, for example, 1 to 1000 µm, preferably 5 to 200 µm.

Thus, the brazing plate 20 including the plate member 5 (Al substrate 22) and the coating film 29 can be obtained.

Such a brazing plate 20 includes the above-described coating film 29 obtained by applying the brazing material 27 to the plate member 5 (Al substrate 22), and thus has excellent brazing properties.

Therefore, the obtained brazing plate 20 is suitably used in the production of the plate joint tube 2 and the heat exchanger 1.

More specifically, as shown in FIGS. 1 and 2, a pair of brazing plates 20 (plate members 5) are disposed to face each other, and the inner fins 6 are disposed between the pair of brazing plates 20 (plate members 5) so as to correspond to the concave portion 7a and the concave portion 7b.

Then, the inner fins 6 are brazed to the concave portion 7a and the concave portion 7b, respectively, and the contact portions (peripheral edge and convex portion 8) of the pair of brazing plates 20 (plate member 5) are brazed to each other.

As a result, the pair of brazing plates 20 (plate member 5) are joined to each other, and the concave portions 7a facing each other form a hollow space, and the concave portions 7b facing each other form a hollow space, thereby forming two refrigerant passages 15. The inner fins 6 are fixed to the refrigerant passages 15.

In this manner, a plate joint tube 2 can be produced, and the heat exchanger 1 including a joined body of the above-described brazing plates 20 (brazing member) can be produced by laminating such plate joint tubes 2.

The heat exchanger 1 is produced by using the above-described brazing plate 20, and thus can have excellent brazing properties.

The above-described brazing members and heat exchanger are suitably used as a heat exchanger for an air conditioner used in, for example, the vehicle interior of an automobile or a room of a house.

In the above-described method of producing a brazing member, the above-described brazing material is used. Therefore, according to the above-described method of producing a brazing member, excellent application properties (in particular, spray application properties) and brazing properties can be obtained.

In the above description, the brazing material 27 is applied to the plate member 5 by the spray method, but the application method is not limited to the spray method. For example, the brazing material 27 may be applied to the plate member 5 by the above-described dispensing method and friction method.

For example, when the dispensing method is employed, the Al substrate 22 is first processed in the above-described processing step. Next, in the above-described application step, the solid brazing material 27 is heated and melted. Thereafter, the melt of the brazing material 27 is supplied to a known discharge device (for example, a jet dispenser) and discharged onto the Al substrate 22. As a result, the above-described coating film (solidified coating film) 29 is formed. Such a method of producing a brazing member also uses the above-described brazing material, and has excellent application properties and brazing properties.

Furthermore, for example, when the friction method is employed, the Al substrate 22 is first processed in the above-described processing step. Next, the solid brazing material 27 is rubbed against the Al substrate 22 by a known method without being heated and melted. As a result, the solid brazing material 27 is scraped, and the scraped brazing material 27 adheres to the Al substrate 22. As a result, the above-described coating film (solidified coating film) 29 is formed. Such a method of producing a brazing member also uses the above-described brazing material, and has excellent application properties and brazing properties.

### Examples

Next, the present invention is described with reference to Examples and Comparative Examples. The present invention is not limited to the following Examples. The "parts" and "%" are based on mass unless otherwise specified. The specific numeral values used in the description below, such as blending ratios (content ratios), physical property values, and parameters, can be replaced with the corresponding blending ratios (content ratios), physical property values, and parameters in the above-described "DESCRIPTION OF THE EMBODIMENT", including the upper limit values (numeral values defined with "or less", and "less than") or the lower limit values (numeral values defined with "or more", and "more than").

### 1. Production of Brazing Material

### Examples 1 to 24 and Comparative Examples 1 to 10

Brazing materials were obtained according to the formulations shown in Tables 1 to 3.

More specifically, in accordance with the formulations shown in Tables 1 to 4, a fluoride-based flux, a solidifying agent, and an amine compound or a non-amine compound were charged into a kneader (manufactured by PRIMIX Corporation, 2P-1) heated to 60°C, and were heated and mixed at 100 rpm for 20 minutes. After that, the obtained mixture was cooled to 25°C, and it was confirmed that the mixture was solid. Thus, a brazing material was obtained.

### 2. Evaluations

### (1) Application Properties (Flocculation)

20 parts by mass of the brazing material was heated to 60°C and melted. Separately, 80 parts by mass of 1,8-nonanediol was heated to 60°C and melted. Next, the melt of the brazing material and 1,8-nonanediol were mixed. Thereafter, 1 g of the obtained mixture was collected and dropped onto a grindometer (manufactured by Erichsen) to confirm the size of the flocculated particles. The application properties (flocculation) were evaluated according to the following criteria.
⊚: The particle diameters of the flocculated particles were 30 µm or less.
∘: The particle diameters of the flocculated particles were more than 30 µm and 40 µm or less.
△: The particle diameters of the flocculated particles were more than 40 µm and 50 µm or less.
×: The particle diameters of the flocculated particles were more than 50 µm.

### (2) Application properties (Homogeneous Coating Film)

The brazing material was heated to 60°C and melted. Next, the melt of the brazing material was stirred and charged into a spray coater (spraying machine, manufactured by Musashi Engineering, Inc.).

Using the spray coater, the melt of the brazing material was applied to the substrate while the liquid feeding pressure was adjusted so that the application amount was 250 mg. The temperature was adjusted to 80°C, the stroke was adjusted to 2.5 revolutions, and the spraying time was adjusted to 0.08 seconds.

Thereafter, the obtained coating film was observed, and the maximum Feret diameter of the largest droplet was measured in accordance with JIS Z 8827 (2008). The application properties (homogeneity) were evaluated according to the following criteria.
⊚: The maximum Feret diameter of the droplets during the application was 40 µm or less.
∘: The maximum Feret diameter of the droplets during the application was more than 40 µm and 60 µm or less.
∘-: The maximum Feret diameter of the droplets during the application was more than 60 µm and 80 µm or less.
△: The maximum Feret diameter of the droplets during the application was more than 80 µm and 100 µm or less.
×: The maximum Feret diameter of the droplets during the application was more than 100 µm.

### (3) Anti-hard Caking Properties

40 g of the brazing material was heated to 60°C and melted. Next, the melt of the brazing material was stirred, charged into a 50 ml sample tube, and left to stand at 80°C for 16 hours. Thereafter, the melt of the brazing material was subjected to a compression test using a rheometer (MCR301 manufactured by Anton Paar, measurement jig P-25). Then, the thickness of the sedimentation layer having a hardness of 50 N or more was confirmed, and the anti-hard caking properties were evaluated according to the following criteria.
∘: The thickness of the hard cake layer was 3% or less of the total melt.
∘-: The thickness of the hard cake layer was more than 3% and 5% or less of the total melt.
△: The thickness of the hard cake layer was more than 5% and 10% or less of the total melt.
△-: The thickness of the hard cake layer was more than 10% and 15% or less of the total melt.
×: The thickness of the sedimentation layer was more than 15% of the total melt.

### (4) Brazing Properties

The brazing material was heated to 80°C and melted. Next, the melt of the brazing material was stirred and charged into a spray coater (spraying machine, manufactured by Musashi Engineering, Inc.).

Using the spray coater, the melt of the brazing material was applied to an aluminum member (A1050 50 mm×25 mm×0.8 mm) while the liquid feeding pressure was adjusted so that the application amount was 100g/m². The temperature was adjusted to 80°C, the stroke was adjusted to 2.5 revolutions, and the spraying time was adjusted to 0.08 seconds. Thus, a test piece was prepared.

Thereafter, the test piece was preheated at 250°C in an air atmosphere using a brazing furnace (box electric furnace, A(V)-DC-M, manufactured by NORITAKE TCF CO., LTD.). Thereafter, the test piece was heated at 600°C in a nitrogen gas atmosphere (oxygen concentration 100 ppm or less) and brazed.

The discoloration of the brazed portion was visually confirmed, and the brazing properties were evaluated according to the following criteria.
∘: Almost no black discoloration was observed.
△: Black discoloration was observed in a part of the coated area.
×: Black discoloration was observed throughout the coated area.

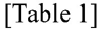

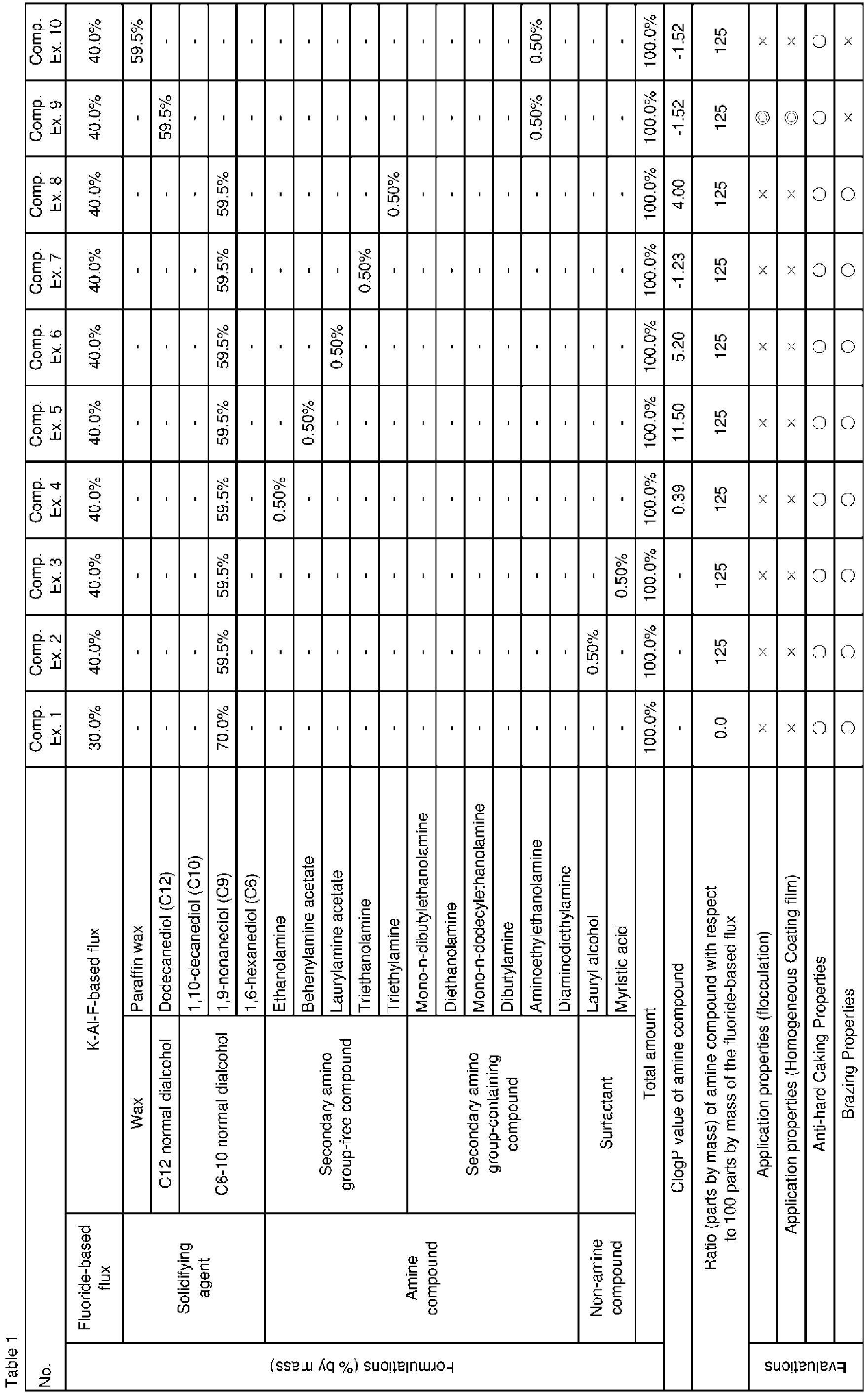

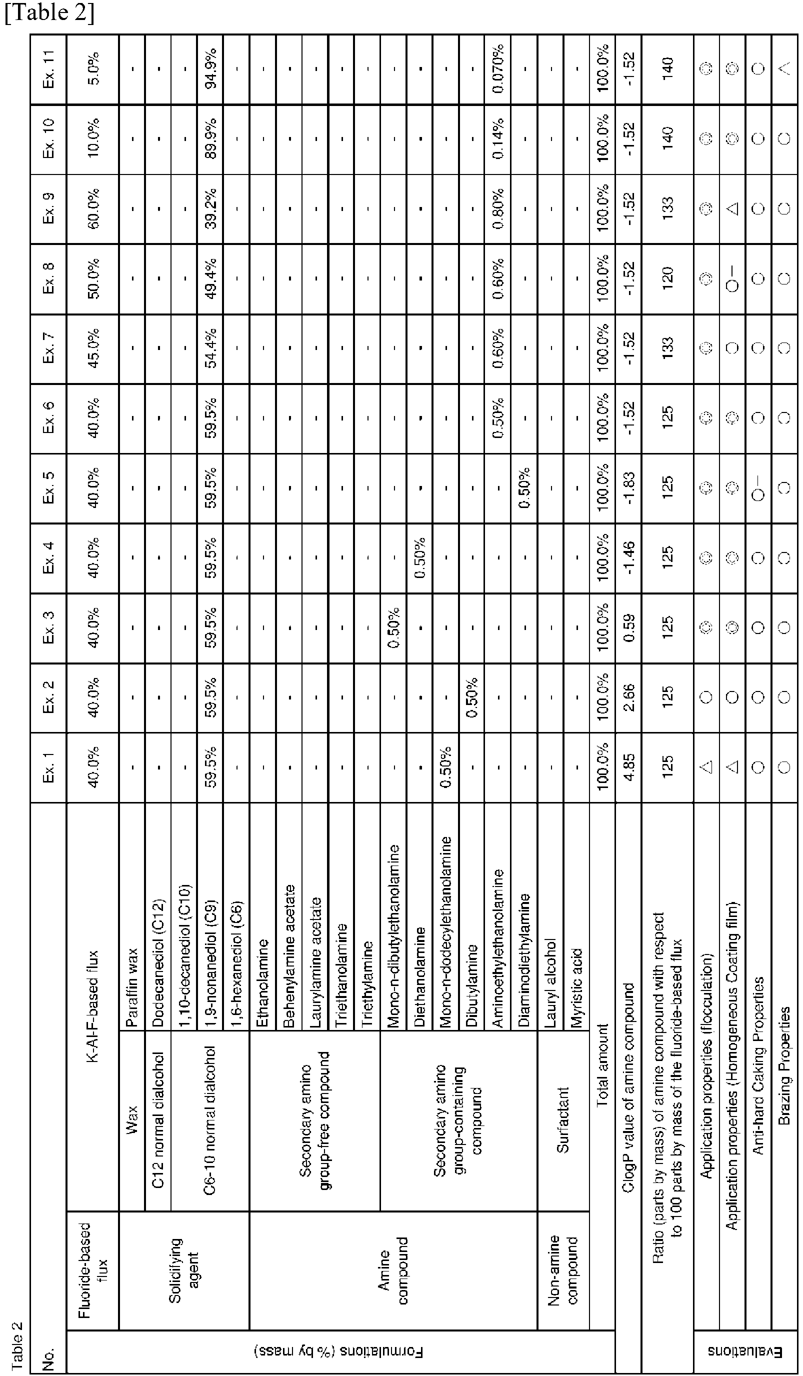

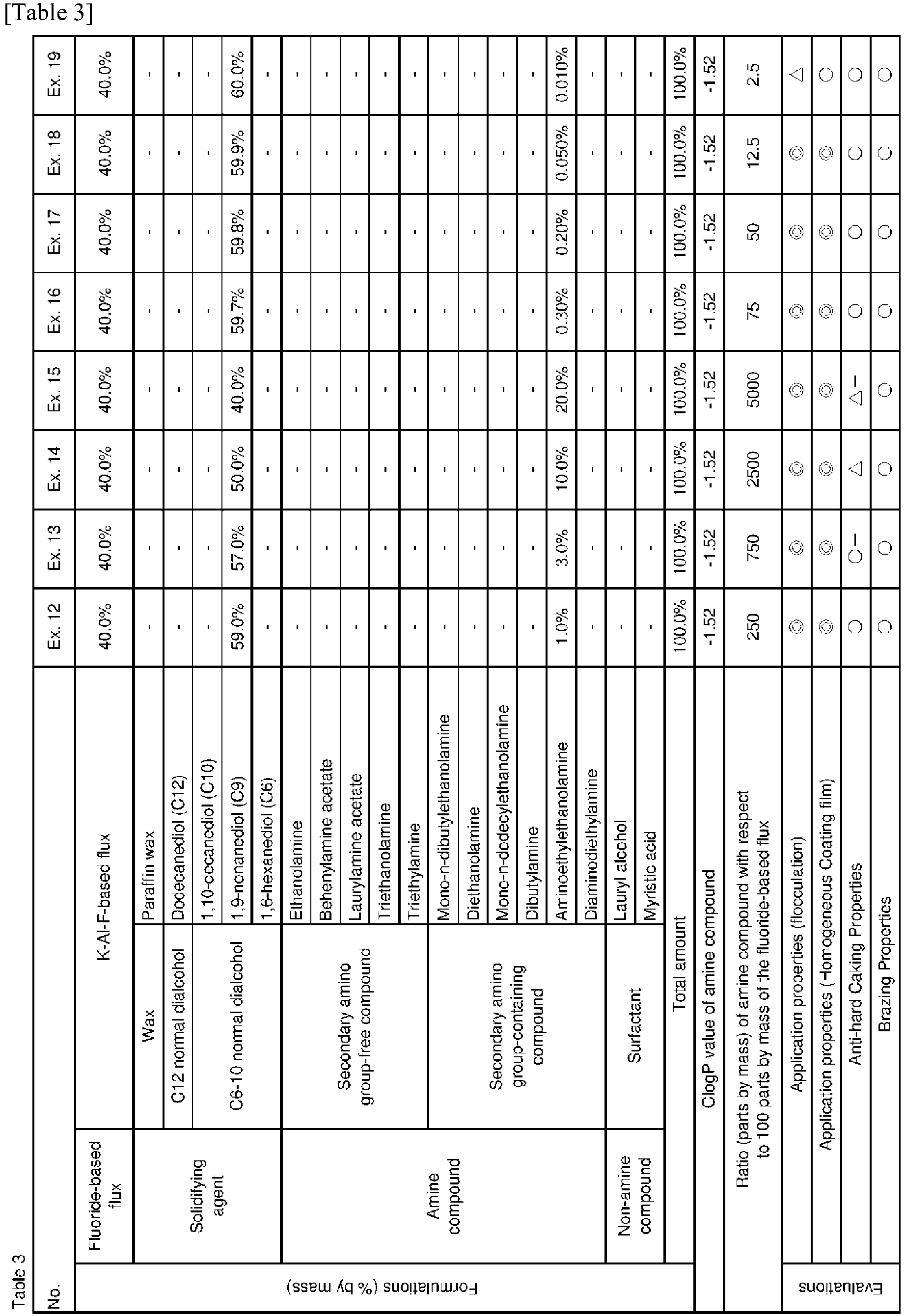

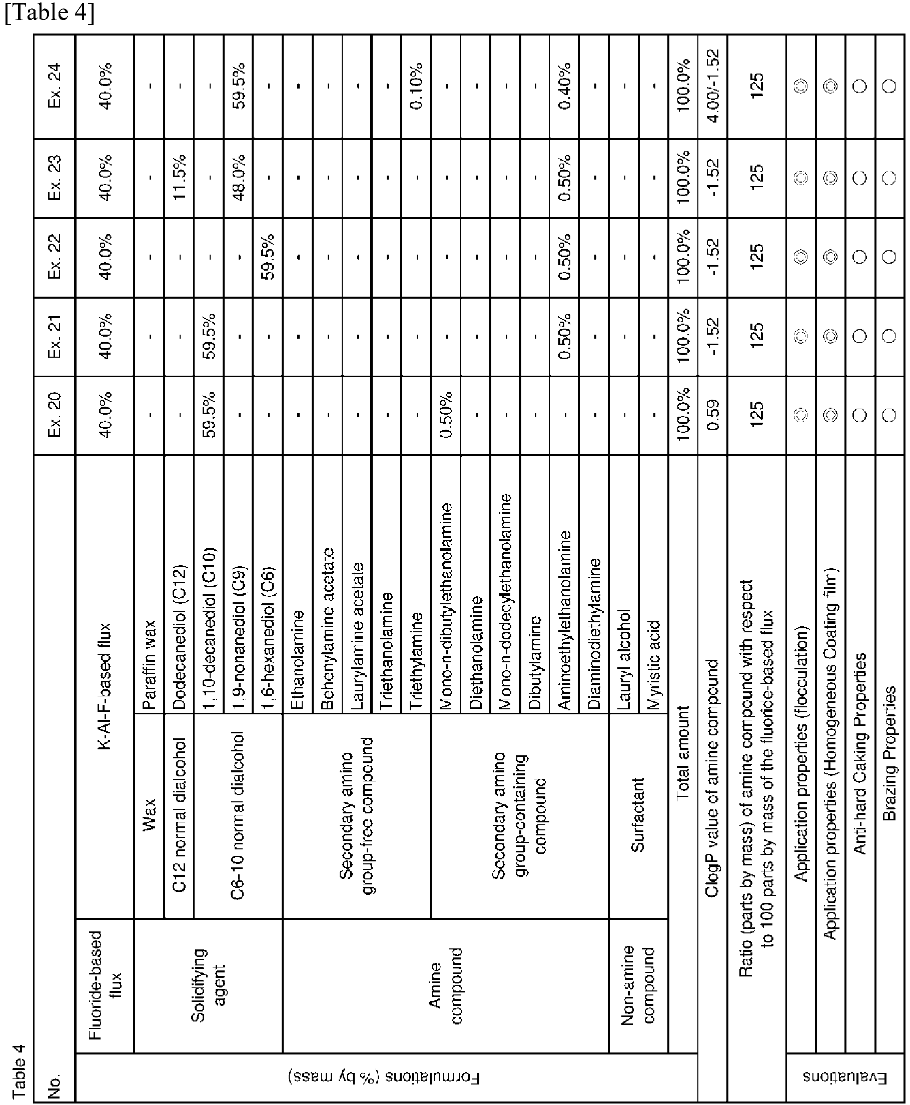

Details of the abbreviations in the tables are described below.
K-Al-F based flux: product name FL7-SS, manufactured by MORITA CHEMICAL INDUSTRIES CO., LTD.
Paraffin wax: product name Paraffin Wax-115, manufactured by NIPPON SEIRO CO., LTD.

### Description of Reference Numerals

- 1: Heat exchanger
- 2: Plate joint tube
- 3: Tube laminate
- 4: Refrigerant supply/drain pipe
- 5: Plate member

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The brazing material, brazing member, and method of producing a brazing member of the present invention are suitably used in a heat exchanger including aluminum or an aluminum alloy.

## Claims

1. A brazing material for brazing aluminum or an aluminum alloy,
the brazing material comprising:
a fluoride-based flux;
a solidifying agent; and
an amine compound,
the brazing material being solid at 25°C,
wherein the solidifying agent contains a normal dialcohol having 6 to 10 carbon atoms, and
wherein the amine compound contains a secondary amino group-containing compound.

2. The brazing material according to claim 1, wherein the secondary amino group-containing compound has a ClogP value of -1.85 to 5.00.

3. The brazing material according to claim 1, wherein a content ratio of the amine compound with respect to 100 parts by mass of the fluoride-based flux is 3 to 5000 parts by mass.

4. A brazing member comprising:
aluminum or an aluminum alloy; and
a coating film obtained by applying the brazing material according to claim 1 to the aluminum or the aluminum alloy.

5. A heat exchanger comprising a joined body of the brazing member according to claim 4.

6. A method of producing a brazing member, the method comprising:
a processing step of processing a substrate made of aluminum or an aluminum alloy;
and
an application step of heating and melting the brazing material according to claim 1, thereafter supplying the brazing material to a spray device, and spraying the brazing material onto the substrate.

7. A method of producing a brazing member, the method comprising:
a processing step of processing a substrate made of aluminum or an aluminum alloy;
and
an application step of heating and melting the brazing material according to claim 1, thereafter supplying the brazing material to a discharge device, and discharging the brazing material onto the substrate.

8. A method of producing a brazing member, the method comprising:
a processing step of processing a substrate made of aluminum or an aluminum alloy;
and
an application step of applying the brazing material according to claim 1 to the substrate by friction of the brazing material.
